(19) Europäisches Patentamt
European Patent Office
Office européen des brevets

(11) **EP 1 944 911 A2**

(12) **EUROPEAN PATENT APPLICATION**

(43) Date of publication:
**16.07.2008 Bulletin 2008/29**

(51) Int Cl.:
***H04L 12/28*** (2006.01)

(21) Application number: **07118157.2**

(22) Date of filing: **09.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **11.01.2007 US 844464**
**13.07.2007 US 777494**

(71) Applicant: **FUJITSU LIMITED**
**Kawasaki-shi,**
**Kanagawa 211-8588 (JP)**

(72) Inventors:
• **Zhu, Chenxi**
**Kawasaki-shi, Kanagawa 211-8588 (JP)**

• **Chen, Wei-Peng**
**Kawasaki-shi, Kanagawa 211-8588 (JP)**
• **Agre, Jonathan**
**Kawasaki-shi, Kanagawa 211-8588 (JP)**
• **Viorel, Dorin**
**Kawasaki-shi, Kanagawa 211-8588 (JP)**
• **Seshadri, Jagan**
**Kawasaki-shi, Kanagawa 211-8588 (JP)**

(74) Representative: **Wilding, Frances Ward et al**
**Haseltine Lake**
**Lincoln House**
**300 High Holborn**
**London WC1V 7JH (GB)**

(54) **Reuse pattern network scheduling using load levels**

(57) One or more stations are sorted based on respective load levels, and a reuse pattern is generated, based on the sorted load levels and mapped interference levels, including one or more reuse sets of stations capable of sharing a transmission resource. The stations within each reuse set are listed in order based on their respective load levels, and an additional station is added to a reuse set, as long as the cumulative transmission level within the reuse set is below a threshold interference level and the additional station is not already listed in another reuse set. A network schedule is updated based on the reuse pattern to increase bandwidth efficiency in the network.

Fig. 2

## Description

CROSS-REFERENCE TO RELATED APPLICATIONS

This application is based on, and claims the benefit of U.S. Provisional Application titled "Load-Based MMR Network Scheduling Algorithm With Frequency Reuse", U.S. Application Serial No. 60/884,464, filed January 11, 2007, inventors Chenxi Zhu, Dorin Viorel, Jagan Seshadri, Jonathan Agre and Wei-Peng Chen, Attorney Docket No. 1974.1019P, and which is incorporated herein by reference in its entirety.

BACKGROUND OF THE INVENTION

Description of the Related Art

Wireless communication networks have become increasingly popular and generally include a base station that provides service to a service area located around the base station, where a service area may be a cell area. Subscriber stations, including mobile stations (such as cell phones, etc.), are able to communicate with the base station when they are within the service area (such as a cell area) of the base station.

Interference among stations in the same or different cells of the network can cause significant problems. The use of relay stations in the network can complicate interference problems. The invention is defined in the independent claims, to which reference should now be made. Advantageous embodiments are set out in the sub claims.

Various embodiments of the present invention provide a method and apparatus which (a) sorts one or more stations in order based on respective load levels; and (b) generates a reuse set, based on the sorting, of stations, included in said one or more stations, capable of sharing a transmission resource.

Various embodiments of the present invention provide a method and apparatus which (a) sorts one or more stations, in an Institute of Electrical and Electronics Engineers (IEEE) 802.16j system, each station of said one or more stations being a base station or a relay station, in order based on respective load levels; and (b) generates a reuse pattern, based on the sorting, including one or more reuse sets of stations, included in said one or more stations, capable of sharing a transmission resource, by adding an addition unassigned station with a highest load level as long as a cumulative interference level within the reuse set is below a threshold interference level.

Various embodiments of the present invention provide a system for generating a reuse pattern based on load levels in an IEEE 802.16j network which includes (a) means for sorting one or more stations in order based on respective load levels; (b) means for generating the reuse pattern, based on said means for sorting, including one or more reuse sets of stations, included in said one or more stations, capable of sharing a transmission resource, where an additional station with a highest load level is added to a reuse set, as long as a cumulative interference level within the reuse set is below a threshold interference level and the additional station is not already listed in another reuse set; (c) means for removing empty reuse sets; and (d) means for updating a network schedule, by a network management entity, based on the reuse pattern to increase bandwidth efficiency in the network.

The above embodiments of the present invention are simply examples, and all embodiments of the present invention are not limited to these examples or to including all the features described in the Summary of the Invention section of this application.

Additional features of the invention will be set forth in part in the description which follows, and, in part, will be obvious from the description, or may be learned by practice of the invention. Preferred features of the present invention will now be described, purely by way of example, with reference to the accompanying drawings, in which:-

Fig. 1 is an illustration of an example of a wireless network topology involving a base station, a network management entity and three relay stations operating in an OFDMA network under the IEEE 802.16j standard.

Fig. 2 is a flowchart illustrating the method of sorting one or more stations based on load levels in a wireless network and generating a reuse set, according to embodiments of the present invention.

Fig. 3 is a flowchart illustrating the method of generating a reuse set, according to embodiments of the present invention.

Fig. 4 is a flowchart illustrating the method of generating one or a plurality of reuse sets and a reuse pattern used to update a network schedule, according to embodiments of the present invention.

DETAILED DESCRIPTION OF THE PREFERRED EMBODIMENTS

Reference will now be made in detail to the present preferred embodiments of the present invention, examples of which are illustrated in the accompanying drawings, wherein like reference numerals refer to like elements throughout.

In wireless communication networks, due to such effects as shadowing arising from blockage by buildings and other obstructions between transmission/reception antennas, there exist dead zones in which communication with the base station is not possible, despite being within the service area. To combat this problem, in a wireless network, such as for example, an Orthogonal Frequency Division Multiple Access (OFDMA) network, relay stations can be employed for providing enhanced transmission capabilities by acting as intermediaries between mobile stations operating in the network and the base station. In this manner, a mobile station that is incapable of connecting directly to a base station within its cell service area may still connect indirectly to the base station by first communicating with a relay station that does have a direct link, or possibly an indirect link through additional relay stations, to the base station.

A problem arises, however, in that greater levels of interference are produced in the network with the addition of base and relay stations. Spatial reuse of the spectrum in the network is required to increase the spectrum efficiency and total capacity of the network, subject to the requirement that the interference caused by concurrent transmissions needs to be carefully managed. Since the increased intranet interference degrades the carrier to interference-plus-noise ration (CINR) for the impacted links, properly scheduling the concurrent transmissions to mitigate the interference levels impacts directly the quality of service (QoS) on these links.

Therefore, a network entity schedule algorithm can be defined that reduces the intranet interference between different stations (either base stations or relay stations) operating within the wireless network (e.g., an OFDMA network) while at the same maximizes the spatial reuse of the radio resource, thereby optimizing CINR degradation and thus allowing higher coding rates to be used on the impacted links.

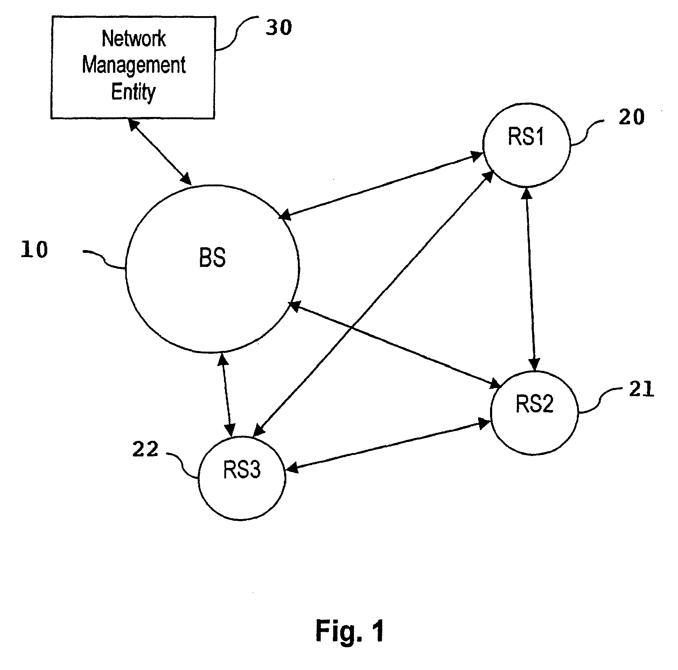

Fig. 1 is an illustrative example of a wireless network topology involving a base station and three relay stations operating in an OFDMA network. The network cell includes a base station (BS) 10, a first relay station (RS1) 20, a second relay station (RS2) 21, a third relay station (RS3) 22 and a network management entity 30. This example topology is intended to show a single possibility of a network cell, and embodiments of the present invention are not limited to any particular topology. For example, embodiments of the present invention are not limited to a network with the specific number of base and/or relay stations in the specific configuration shown in Fig. 1.

In the specific example in Fig. 1, RS1 20 can communicate directly with BS 10 via the transmission link between BS 10 and RS1 20, or indirectly via the transmission link from BS 10 to RS2 21 and then through the transmission link from RS2 21 to RS1 20.

Various embodiments of the present invention assume a fixed network. That is, the base stations and relay stations are assumed to be in fixed positions and each transmitter (either a base station or a relay station) transmits with a fixed power assigned by network management entity 30. However, the present invention is not subject to the requirements that all base stations or relay stations are fixed at all time.

As the algorithms described herein are computationally demanding, various embodiments of the present invention are intended for use in networks where, for example, each base station and relay station generates its own transmission schedule. However, the present invention is not limited to each base and relay station generating its own transmission schedule.

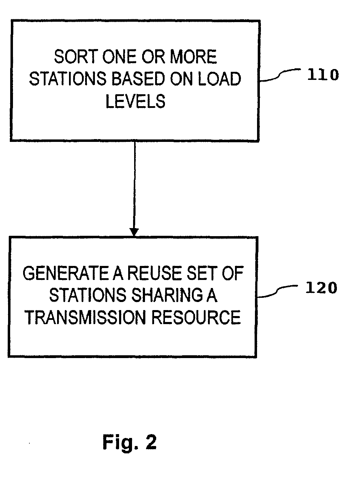

Fig. 2 is a flowchart illustrating a method of mapping interference levels occurring at one or more stations in a wireless network and generating a reuse set, according to embodiments of the present invention. Referring now to Fig. 2, at operation 110, the one or more stations (either base or relay stations) are sorted, for example, in decreasing order based on their respective load levels. The present invention is not limited to sorting in a decreasing order, and other variations of a sorting procedure can be implemented. In addition, the sorting is capable of being performed by network management entity 30 but is not limited to being performed by any specific network entity, and could be performed by other entities in the network.

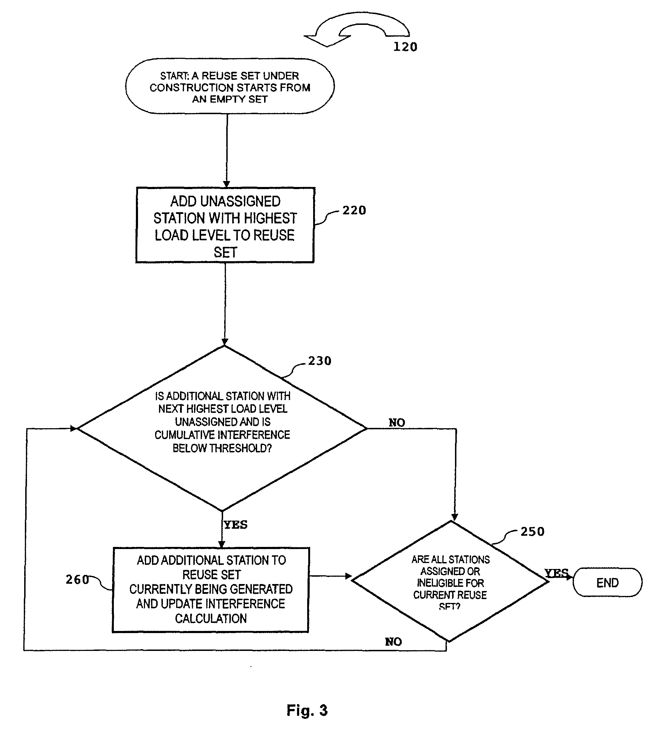

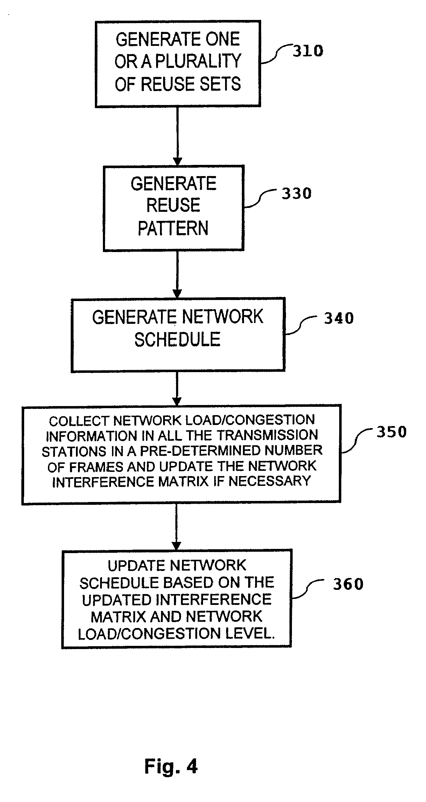

For example, the load level of a station can be an average queue length, determined over a predetermined period of time, or a ratio of throughput to capacity (p). However, the present invention is not limited to any specific type of load level. For example, the base station might determine an average queue length over a period of time and/or the transmission throughput to respective relay stations to determine p. The base station might report this information to the network management entity 30 for generating a reuse set and a reuse pattern (discussed below with reference to Figs. 3 and 4). Of course, the present invention is not limited to the type of station determining load level information or reporting the load level information to a network management entity.

From operation 110, the process moves to operation 120, where a network reuse pattern which consists of a collection of reuse sets of transmission stations (BS or RS). The union of all the reuse sets covers every BS and RS, and different reuse sets are exclusive (no BS or RS belongs to more than 1 reuse sets). Specific operations of generating the reuse set are described in detail with reference to Fig. 3 described below.

Fig. 3 is a flowchart illustrating a method of generating a reuse set, according to an embodiment of the present invention. Referring now to Fig. 3, in operation 220, network management entity 30 determines, for example, the station with the highest load level which has not been assigned to any reuse set based on the sorting operation 110, and this station is added to the reuse set. The present invention is not limited to determining the station with the highest load level, and other variations can be implemented, based on the sorting procedure implemented in operation 110. In addition, the determination is not limited to being performed by network management entity 30, and could be performed by other entities in the network.

From operation 220, the process moves to operation 230, in which it is determined, using the sorting procedure 110, whether the station with the next highest load level and currently unassigned to a reuse set and whether the cumulative interference level within the reuse set currently being generated would be below a threshold interference level if the station with the next lowest interference level is added to the reuse set currently being generated. To determine the interference levels of each station, an interference mapping procedure, for example, can be executed. Of course, the present invention is not limited to any particular method of mapping interference levels occurring at each station.

For example, network management entity 30 (see Fig. 1) produces a mapped interference matrix based, for example, on noise plus interference measurements performed by different stations (e.g., base station 10) positioned within a cluster of cells subject to the interference mapping. That is, the interference matrix includes the noise plus interference generated by each station upon each other station.

A mapping interference mode is, for example, a maintenance type of operation, in which an implementation-specific network interference mapping pattern is transmitted from a station using, for example, a constant RF power. As an example, each relay station within the cluster of cells subject to the interference mapping transmits within the same uplink (UL) frame, a specific UL interference pattern based, for example, on a specific UL sounding sequence. Upon receiving the UL interference patterns, all stations within the cluster of cells execute, for example, burst noise power measurements on the received UL interference patterns. Of course, the present invention is not limited to any particular UL interference pattern based on any specific UL sounding sequence, or to stations executing any particular burst noise power measurements.

For example, the burst power measurements executed by the stations are implementation specific and could include, for example, Received Signal Strength Indication (RSSI) measurements or, for example, Signal to Interference Plus Noise Ration (SINR) measurements. These burst power measurements are, for example, proportional with the interference path between stations sending and receiving the UL interference patterns. Of course, the present invention is not limited to any particular measurements being included in the executed burst power measurements.

According to various embodiments of the present invention, the network interference mapping pattern is scheduled, for example, periodically by network management entity 30. Each base station (e.g. base station BS 10) then, for example, averages the burst power measurements from each station and transmits the averaged measurements to network management entity 30 to generate the interference matrix. However, the present invention is not limited to periodic scheduling of network interference mapping, or to any particular types of calculations.

An example interference matrix (*INT*) shown below maps the noise plus interference caused by each station upon each other station in the wireless network. As shown in this example, $NI_{ij}$ represents the noise (*N*) plus interference (*I*) caused by station "i" upon station "j". The effect is not necessarily symmetrical due to the potential different transmission powers of the stations, although it is assumed that each transmitter transmits with a fixed power. This example shows a square Y×Y matrix, but the matrix could also be an Y×M matrix.

$$INT = \begin{bmatrix} NI_{1,1} & NI_{1,2} & NI_{1,3} \\ NI_{2,1} & NI_{2,2} & NI_{2,3} \\ NI_{3,1} & NI_{3,2} & NI_{3,3} \end{bmatrix}$$

The above-described mapping the interference levels by estimation of the interference matrix is described, for example, in U.S. Provisional Application No. 60/864,491, titled "INTERFERENCE MAPPING PROCEDURE FOR OFDMA NETWORKS USING RELAY STATIONS", inventors Chenxi Zhu, Dorin Viorel, Jagan Seshadri, Jonathan Agre and Wei-Peng Chen, filed November 6, 2006, attorney docket number 1974.1007P, and U.S. Provisional Application No. 60/891,096, titled "INTERFERENCE MAPPING PROCEDURE FOR OFDMA NETWORKS USING RELAY STATIONS", inventors Chenxi Zhu, Dorin Viorel, Jagan Seshadri, Jonathan Agre and Wei-Peng Chen, filed February 22, 2007, attorney docket number 1974.1020P, and U.S. utility patent application titled "INTERFERENCE MEASURING AND MAPPING METHOD AND APPARATUS FOR WIRELESS NETWORKS USING RELAY STATIONS", inventors Chenxi Zhu, Dorin Viorel, Jagan Seshadri, Jonathan Agre and Wei-Peng Chen, attorney docket number 1974.1020, filed concurrently herewith, and which are incorporated herein by reference in their entirety. However, the present invention is not limited to this specific manner of mapping the interference levels, and other manners of mapping the interference levels can be implemented. More specifically, the present invention is not limited to the mapping the interference levels by estimation of the interference matrix as described above, and in U.S. Provisional Application No. 60/864,491, titled "INTERFERENCE MAPPING PROCEDURE FOR OFDMA NETWORKS USING RELAY STATIONS", inventors Chenxi Zhu, Dorin Viorel, Jagan Seshadri, Jonathan Agre and Wei-Peng Chen, filed November 6, 2006, attorney docket number 1974.1007P, and U.S. Provisional Application No. 60/891,096, titled "INTERFERENCE MAPPING PROCEDURE FOR OFDMA NETWORKS USING RELAY STATIONS", inventors Chenxi Zhu, Dorin Viorel, Jagan Seshadri, Jonathan Agre and Wei-Peng Chen, filed February 22, 2007, attorney docket number 1974.1020P, and U.S. utility patent application titled "INTERFERENCE MEASURING AND MAPPING METHOD AND APPARATUS FOR WIRELESS NETWORKS USING RELAY STATIONS", inventors Chenxi Zhu, Dorin Viorel, Jagan Seshadri, Jonathan Agre and Wei-Peng Chen, attorney docket number 1974.1020, filed concurrently herewith. Accordingly, the present invention is not limited to any particular manner of mapping interference levels.

The threshold interference level is a predetermined level set by, for example, the network management entity 30 (see Fig. 1). The threshold interference level is, for example, fixed and is determined, for example, by simulations based on an effective coding rate calculated by averaging transmission rates to mobile stations by the base and/or relay stations. The threshold interference level reflects, for example, the total interference that a downlink transmitter (a base station or a relay station) can tolerate to cause to other cells sharing the same spectrum. The network management entity 30 is capable of determining, for example, the maximal transmission power used by each base and relay station. However, the present invention is not limited to the predetermined level of the threshold interference level being set by the network management entity 30 or to being fixed or to being determined based on any particular simulation.

If both of the conditions checked in operation 230 are not met, the station with the next highest load level is not added to the reuse set currently being generated. It will be added to another reuse set which will be constructed later.

From operation 230, the process moves to operation 250, where it is determined, for example, if all of the previously sorted stations have been either assigned to a reuse set or have been considered and found ineligible for the current reuse set being constructed. If at least one station remains unassigned and has not been considered for the current reuse set, the process returns to operation 230, where the next station in the sorted list of stations, with a next highest load level, is checked to determine whether it is already assigned to a reuse set or the cumulative interference level within the reuse set currently being generated would be below a threshold interference level if the current station being checked is added to the reuse set currently being generated.

If both of the conditions checked in operation 230 are satisfied, the process moves to operation 260 in which the station being checked is, for example, added to the reuse set currently being generated. From operation 260, the process moves to operation 250, which executes the operation described in the previous paragraph.

The process including operations 230, 250 and 260 is reiterated, for example, so long as at least one station is unassigned, as determined by operation 250. The process will terminate after a finite number of iterations because each reuse set will accommodate one or more transmission stations. When operation 250 determines that, for example, all stations are assigned, the process ends.

As an illustrative example, a routine for creating a reuse set is set forth below:

• For j = 1 to M (where M is the total number of stations)

o If j is already assigned to a reuse set, skip;

o Sj = [j] (where j is the most heavily loaded station that is not already assigned to a ruse set);

o For i = j + 1 to M (where i is the next station determined by the sorting)

■ If i is already in some reuse set, skip,

■ If for all j in $S_j$, $\Sigma_{j' \text{ in } \{Sj\}} NI_{j,j} + NI_{i,j} < T^{int}_{k(j)}$, and $\Sigma_{j \text{ in } \{Sj\}} NI_{j,j} < T^{int}_{k(i)}$, add i to $S_j$ (where k is an effective coding rate calculated by averaging transmission rates to, for example, mobile stations from station i or j);

o End;

• End.

The result of the foregoing routine produces a reuse set of stations (base stations or relay stations) that can share a same transmission resource. It is noted that embodiments of the present invention are not limited to the foregoing routine, and one skilled in the art appreciate that similar routines, for example, may be used to provide equivalent features within the scope of the present invention.

The process illustrated in Fig. 3 assures that each generated reuse set includes as many stations (relay and/or base stations) as possible, while maintaining a cumulative transmission level below the threshold interference level. Thus, each generated reuse set includes the maximum number of stations, grouped based on relative load levels, while tolerating the cumulative interference when transmitting with a predetermined transmission power. As a result, each generated reuse set includes one or more stations which are capable of sharing a transmission resource, including a frequency or a timeslot, or a combination of both. Of course, a transmission source, according to the present invention, is not limited to any specific frequency or timeslot. It is noted that the processes of Fig. 3 could be repeated in order to create a plurality of reuse sets, if more stations remain unassigned and cannot satisfy the conditions of operation 230 for the currently generated reuse set.

Of course, the process in Fig. 3 is only one example of a process to generate a reuse set, and many variations are possible. The present invention is not limited to the specific example in Fig. 3. For example, the present invention is not limited to including each of the specific operations in Fig. 3. Moreover, there are many variations of the specific operations in Fig. 3 that can be implemented.

Fig. 4 is a flowchart illustrating the method of generating one or a plurality of reuse sets and a reuse pattern used to update a network schedule, according to an embodiment of the present invention. Referring now to Fig. 4, operation 310 represents the generation of one or a plurality of reuse sets using the reuse set generation operation described above (see Fig. 3).

From operation 310, the process moves to operation 330, in which, for example, the remaining reuse sets are grouped to form a reuse pattern, including one or a plurality of reuse sets.

From operation 330, the process moves to operation 340, where, for example, the network management entity 30 or a base station 10 (see Fig. 1) generates a network schedule including the radio resources that base station and relay stations in each respective reuse set is allowed to use for its downlink access. The bandwidth can be efficiently allocated using, for example, the reuse pattern by assigning resources to individual reuse sets including a maximum number of base stations and relay stations, while, for example, maintaining a cumulative transmission level below the predetermined threshold interference level. As an example, each station generates its own transmission schedule using the radio resource assigned to it by, for example, network management entity 30 or a base station 10. Of course, the present invention is not limited to these examples.

From operation 340, the process moves to operation 350, where network management entity 30 or the base station 10 waits, for example, for a predetermined period of time before updating the network schedule. The base station may update the network interference matrix by having the transmission stations estimate the interference from other transmission stations, and collect and update the network load and/or congestion information. Because the computations at network management entity 30 or the base station 10 are intensive, the update may take place, for example, over tens of frames. For example, the network schedule can be set to update every ten seconds. However, the present invention is not limited to any particular period of time before updating the network schedule.

From operation 350, the process moves to operation 360, where the network schedule is updated after a predetermined period of time in order to assure that the network schedule optimally allocates transmission resources, based on the reuse pattern.

Of course, the process in Fig. 4 is only one example of a process to generate one or a plurality of reuse sets and a reuse pattern. The present invention is not limited to the specific example in Fig.4. For example, the present invention is not limited to including each of the specific operations in Fig. 4. Moreover, there are many variations of the specific operations in Fig. 4 that can be implemented.

Various embodiments of the present invention provide a method and apparatus capable of (a) sorting one or more stations in decreasing order based on respective load levels; and (b) generating a reuse set, based on the sorting, of stations, included in said one or more stations, capable of sharing a transmission resource.

Various embodiments of the present invention provide a method and apparatus capable of (a) sorting one or more stations, in an Institute of Electrical and Electronics Engineers (IEEE) 802.16 system, each station of said one or more stations being a base station or a relay station, in decreasing order based on respective load levels; and (b) generating a reuse pattern, based on the sorting, including one or more reuse sets of stations, included in said one or more stations, capable of sharing a transmission resource, by adding an addition unassigned station with a highest load level as long as a cumulative interference level within the reuse set is below a threshold interference level.

Various embodiments of the present invention provide a method and apparatus which (a) generates a reuse pattern comprising one or a plurality of reuse sets; and (b) updates a network schedule, by a network management entity, based on the reuse pattern, to increase bandwidth efficiency.

Various embodiments of the present invention are applicable to IEEE 802.16 networks, which includes amendments or extensions to IEEE 802.16. Moreover, the IEEE 802.16 standard is incorporated herein by reference. However, the present invention is not limited to IEEE 802.16 networks, and is applicable to other types of networks.

Similarly, various embodiments of the present invention are applicable to OFDMA networks. However, the present invention is not limited to OFDMA networks, and is applicable to other types of networks.

Various embodiments of the present invention are described herein with respect to "mobile" stations that communicate with base stations and relay stations in a network. However, the present invention is not limited to networks with "mobile" stations. Instead, a network might have many different types of stations, typically referred to as "subscriber" stations, which communicate with base and/or relay stations. A "mobile" station is one type of "subscriber" station. The concept of a subscriber station is well-known.

According to embodiments of the present invention, the above described methods, apparatuses and systems can, for example, mitigate the intranet interference between different stations (either base stations or relay stations) operating within the wireless network (e.g., an OFDMA network), thereby optimizing CINR degradation and thus allowing higher coding rates to be used on the impacted links, and cause a related improvement on the spectral efficiency per link, considering the improvement in the related bandwidth efficiency.

U.S. Provisional Application titled "REUSE PATTERN NETWORK SCHEDULING ALGORITHM FOR OFDMA NETWORKS USING RELAY STATIONS", U.S. Serial No. 60/864,498, filed November 6, 2006, inventors Chenxi Zhu, Dorin Viorel, Jagan Seshadri, Jonathan Agre and Wei-Peng Chen, Attorney Docket No. 1974.1009P, and its corresponding U.S. Utility Application titled "REUSE PATTERN NETWORK SCHEDULING USING INTERFERENCE LEVELS", inventors Chenxi Zhu, Dorin Viorel, Jagan Seshadri, Jonathan Agre and Wei-Peng Chen, Attorney Docket No. 1974.1009, filed concurrently herewith, are incorporated herein by reference in their entirety.

Although a few preferred embodiments of the present invention have been shown and described, it would be appreciated by those skilled in the art that changes may be made in these embodiments without departing from the principles and spirit of the invention, the scope of which is defined in the claims and their equivalents.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A method comprising:

   sorting one or more stations in order based on respective load levels; and
   generating a reuse set, based on the sorting, of stations, included in said one or more stations, capable of sharing a transmission resource.

2. The method of claim 1, wherein the network is an Institute of Electrical and Electronics Engineers (IEEE) 802.16 system, and/or each of said one or more stations is a base station or a relay station in the system.

3. The method of claim 1, wherein said generating comprises:

   beginning with a station, among the one or more stations, with a highest load level, adding the station to the reuse set;
   adding an additional station with a next highest load level to the reuse set, as long as a cumulative transmission level within the reuse set is below a threshold interference level and the additional station is not already assigned to another reuse set; and
   repeating the adding an additional station until each of the one or more stations is included in a reuse set.

4. The method of claim 3, wherein if the cumulative transmission level is not below the threshold interference level, the additional station is added to a new reuse set.

5. The method of claim 3 or 4, wherein if the additional reuse set is already assigned to another reuse set, the additional reuse set is skipped.

6. The method of any of the preceding claims, wherein the respective load levels are either an average queue length or a ratio of throughput to capacity.

7. The method of any of the preceding claims, further comprising:

   generating a plurality of reuse sets; and
   removing empty reuse sets that include no stations.

8. The method of any of the preceding claims, further comprising:

   generating a dynamic reuse pattern, made up of the plurality of reuse sets, based on a dynamic network load; and
   generating a network schedule, based on the reuse pattern to increase bandwidth efficiency.

9. The method of claim 8, wherein the network schedule is updated at a predetermined time.

10. The method of any of the preceding claims, wherein each station generates its own transmission schedule using a network schedule assigned to it by a network management entity.

11. The method of claim 8, wherein each station generates its own transmission schedule using the network schedule assigned to it by a network management entity.

12. The method of any of the preceding claims, wherein the threshold interference level is predetermined by a network management entity.

13. The method of any of the preceding claims, wherein the threshold interference level is determined based on an effective coding rate calculated by averaging transmission rates to mobile stations by the stations.

14. The method of any of the preceding claims, wherein the stations are fixed.

15. The method of any of the preceding claims, wherein the transmission resource is a frequency or a timeslot.

**16.** The method of any of the preceding claims, wherein the wireless network is a mobile multi-hop relay (MMR) network.

**17.** The method of any of the preceding claims, wherein the one or more stations are sorted in decreasing order based on respective load levels.

**18.** A method comprising:

sorting one or more stations, in an Institute of Electrical and Electronics Engineers (IEEE) 802.16 system, each station of said one or more stations being a base station or a relay station, in order based on respective load levels; and generating a reuse pattern, based on the sorting, including one or more reuse sets of stations, included in said one or more stations, capable of sharing a transmission resource, by adding an additional, unassigned station with a highest load level as long as a cumulative interference level within the reuse set is below a threshold interference level.

**19.** An apparatus comprising:

means for sorting one or more stations in order based on respective load levels; and means for generating a reuse set of stations, based on said means for sorting, included in said one or more stations, capable of sharing a transmission resource, by adding an additional, unassigned station with a highest load level as long as a cumulative interference level within the reuse set is below a threshold interference level.

**20.** A system for generating a reuse pattern based on load levels in an Institute of Electrical and Electronics Engineers (IEEE) 802.16 network, comprising:

means for sorting one or more stations in order based on respective load levels; means for generating the reuse pattern, based on said means for sorting, including one or more reuse sets of stations, included in said one or more stations, capable of sharing a transmission resource, wherein

an additional station with a highest load level is added to a reuse set, as long as a cumulative interference level within the reuse set is below a threshold interference level and the additional station is not already listed in another reuse set;

means for removing empty reuse sets; and means for updating a network schedule, by a network management entity, based on the reuse pattern to increase bandwidth efficiency in the network.

**Fig. 1**

SORT ONE OR MORE STATIONS BASED ON LOAD LEVELS ⟍ 110

GENERATE A REUSE SET OF STATIONS SHARING A TRANSMISSION RESOURCE ⟍ 120

**Fig. 2**

120

START: A REUSE SET UNDER
CONSTRUCTION STARTS FROM
AN EMPTY SET

ADD UNASSIGNED
STATION WITH HIGHEST
LOAD LEVEL TO REUSE
SET
— 220

230

IS ADDITIONAL STATION WITH
NEXT HIGHEST LOAD LEVEL
UNASSIGNED AND IS
CUMULATIVE INTERFERENCE
BELOW THRESHOLD?

NO

YES

260

ADD ADDITIONAL STATION TO
REUSE SET
CURRENTLY BEING GENERATED
AND UPDATE INTERFERENCE
CALCULATION

250

ARE ALL STATIONS
ASSIGNED OR
INELIGIBLE FOR
CURRENT REUSE
SET?

YES

END

NO

Fig. 3

```
┌─────────────────────┐
│   GENERATE ONE      │
│  OR A PLURALITY     │─── 310
│   OF REUSE SETS     │
└─────────────────────┘
           │
           ▼
┌─────────────────────┐
│     GENERATE        │
│      REUSE          │─── 330
│     PATTERN         │
└─────────────────────┘
           │
           ▼
┌─────────────────────┐
│  GENERATE NETWORK   │
│     SCHEDULE        │─── 340
└─────────────────────┘
           │
           ▼
┌───────────────────────────────────┐
│   COLLECT NETWORK LOAD/CONGESTION  │
│  INFORMATION IN ALL THE TRANSMISSION│
│ STATIONS IN A PRE-DETERMINED NUMBER│─── 350
│  OF FRAMES AND UPDATE THE NETWORK  │
│  INTERFERENCE MATRIX IF NECESSARY  │
└───────────────────────────────────┘
           │
           ▼
┌─────────────────────┐
│   UPDATE NETWORK    │
│ SCHEDULE BASED ON THE│
│ UPDATED INTERFERENCE │─── 360
│  MATRIX AND NETWORK │
│ LOAD/CONGESTION LEVEL.│
└─────────────────────┘
```

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 88446407 P
- US 864491 P
- US 891096 P
- US 60864498 B